# EUROPEAN PATENT APPLICATION

(11) **EP 2 988 485 A1**
(43) Date of publication of application: **24.02.2016**
(21) Application number: 14306296.6
(22) Date of filing: 20.08.2014
(51) Int. Cl.: H04N 1/60, H04N 21/442

(54) **Methods and apparatus for mapping input image**

(71) Applicant: Thomson Licensing, 92130 Issy-les-Moulineaux (FR)
(72) Inventor: Chamaret, Christel, 35576 CESSON SEVIGNE (FR); Stauder, Jurgen, 35576 CESSON SEVIGNE (FR); Pouli, Tania, 35576 CESSON SEVIGNE (FR)
(74) Representative: Huchet, Anne

(57) **Abstract**

Methods and apparatus for mapping an input image are suggested. The suggested method comprises: determining a computation capability available for the mapping; decomposing the input image into a number M of image portions based on the determined computation capability, M being a positive integer larger than 1; performing mappings on each of the number M of image portions, wherein the mappings are different for at least two of the number M of image portions; and recomposing an output image from the mapped image portions.

## Description

### TECHNICAL FIELD

The present disclosure relates to the technical field of image processing, and in particular to methods and apparatus for mapping an input image.

### BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

With the development of image coding, such as H.264/AVC, Scalable video coding (SVC), etc., enhanced content applications such as High Dynamic Range (HDR), Wide Color Gamut (WCG), and spatial scalability have become widely popular. In such applications, image components of an image are usually mapped in a constrained environment. The image components denote the multiple code values or signal channels that are used to describe an image signal. One example is R, G and B code values for red, green and blue components, respectively, of an image pixel. Another example is intensity, hue and saturation components of the image. The constrained environment consists of limited computation capability such as limited computational power, computational time or computational complexity that is available to execute the mapping of the image components.

However, the existing mapping schemes do not take into account any computation capability issues.

### SUMMARY

The present invention disclosure is provided to solve at least one problem of the prior art. The present disclosure will be described in detail with reference to exemplary embodiments. However, the present disclosure is not limited to the embodiments.

According to a first aspect of the present invention disclosure, there is provided a method for mapping an input image. The method includes: determining a computation capability available for the mapping; decomposing the input image into a number M of image portions based on the determined computation capability, M being a positive integer larger than 1; performing mappings on each of the number M of image portions, wherein the mappings are different for at least two of the number M of image portions; and recomposing an output image from the mapped image portions.

In an embodiment, performing mappings on each of the number M of image portions comprises: calculating a set of mapping operators adapted to image the number M of image portions of the input image; selecting at least two of the calculated mapping operators for each of the number M of image portions; and mapping each of the number M of image portions by sequentially applying the selected mapping operators.

In an embodiment, the mapping operators are inverse Tone Mapping Operators (iTMOs) or gamut mapping operators.

In an embodiment, the computation capability comprises any of computation power, computation time or computation complexity available for the mapping.

In an embodiment, the mapping is performed on image components of the input image, and the image components include R, G and B code values of the input image, or intensity, hue and saturation components of the input image.

In an embodiment, the number M of image portions are one of: independent and non-overlapping spatial image portions; dependent and overlapping spatial image portions; or dependent and multi-resolution levels of the input image.

According to a second aspect of the present invention disclosure, there is provided an apparatus for mapping an input image. The apparatus includes: a determining unit configured to determine a computation capability available for the mapping; a decomposing unit configured to decompose the input image into a number M of image portions based on the determined computation capability, M being a positive integer larger than 1; a mapping unit configured to perform mappings on each of the number M of image portions, wherein the mappings are different for at least two of the number M of image portions; and a recomposing unit configured to recompose an output image from the mapped image portions.

According to a third aspect of the present disclosure, there is provided a computer program product downloadable from a communication network and/or recorded on a medium readable by computer and/or executable by a processor, comprising program code instructions for implementing the steps of a method according to the first aspect of the disclosure.

According to a fourth aspect of the present disclosure, there is provided Non-transitory computer-readable medium comprising a computer program product recorded thereon and capable of being run by a processor, including program code instructions for implementing the steps of a method according to the first aspect of the disclosure.

The present invention disclosure allows applying each mapping operator to a portion of the input image, thereby corresponding mapping operators can be simpler than those applied to the whole image.

### BRIEF DESCRIPTION OF THE DRAWINGS

The above and other objects, features, and advantages of the present disclosure will become apparent from the following descriptions on embodiments of the present disclosure with reference to the drawings, in which:
Figs. 1 and 2 show a flowchart of a method 100 for mapping an input image according to the present disclosure;
Fig. 3 illustrates mapping operators for color gamut expansion; and
Fig. 4 is a schematic block diagram of an apparatus 400 for mapping an input image according to the present disclosure.

### DETAILED DESCRIPTION OF THE PREFERRED EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

As used herein, the word "image" refers to a still image or a picture from a video sequence.

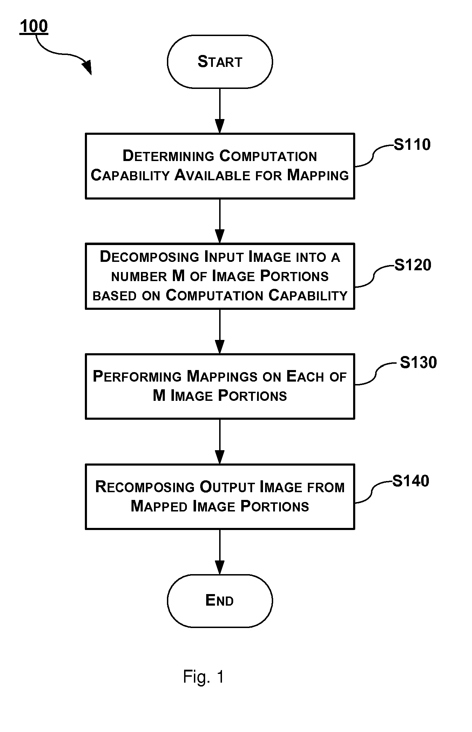

Fig. 1 shows a flowchart of a method 100 for mapping an input image according to the present disclosure. For example, the mapping may be performed on image components of the input image. The image components may include R, G and B code values of the input image, or intensity, hue and saturation components of the input image.

At step S110, a computation capability available for the mapping is determined. As an example, the computation capability may include any of computation power, computation time or computation complexity available for the mapping.

At step S120, the input image is decomposed into a number M of image portions based on the determined computation capability. M is a positive integer larger than 1. That is, the number of the image portions decomposed from the input image depends on the determined computation capability. For example, the higher the computation capability is, the more image portions are decomposed from the input image, i.e., the larger M is.

As an example, the number M of image portions are independent and non-overlapping spatial image portions. As another example, the number M of image portions are dependent and overlapping spatial image portions. As yet another example, the number M of image portions are dependent and multi-resolution levels of the input image.

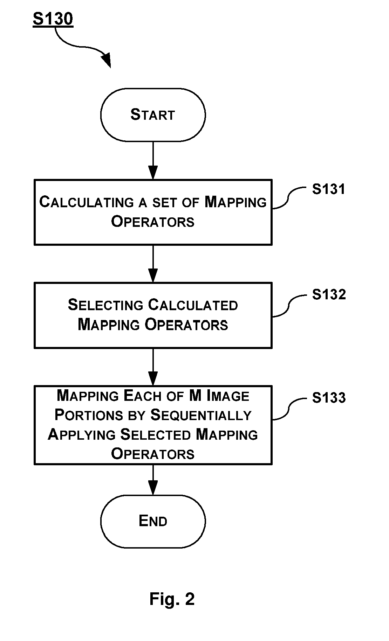

At step S130, mappings are performed on each of the number M of image portions. The mappings are different for at least two of the number M of image portions. For example, this step may be implemented by means of sub-steps S131-S133 as shown in Fig. 2.

At step S131, a set of mapping operators adapted to image the number M of image portions of the input image is calculated. For example, the mapping operators may be inverse Tone Mapping Operators (iTMOs) or gamut mapping operators.

At step S132, at least two of the calculated mapping operators are selected for each of the number M of image portions.

At step S133, each of the number M of image portions is mapped by sequentially applying the selected mapping operators.

In an implementation, a predefined Look-Up Table (LUT) may be used at steps S130. For each possible image component of the input image, a LUT specifies a corresponding image component as a result of employing a corresponding mapping operator. The mapping operator may consist in applying a corresponding LUT to each image portion of the input image (spatial image portion or resolution level) in terms of a certain image component, such as color component or luminance component of the input image.

At step S140, an output image is recomposed from the mapped image portions.

If the computation capability available for the mapping allows and aimed quality is not yet met, the method 100 may be repeated from step S120. For example, a first threshold may be predetermined for the computation capability, such as the maximum computation capability, and a second threshold may be predetermined for quality, such as aimed quality. If the computation capability available for the mapping does not exceed the first threshold and the already achieved quality is lower than the second threshold, the repeating may occur.

Hereinafter, two embodiments of the present disclosure will be described by applying the method 100 in inverse tone mapping and WCG extension, respectively. It should be appreciated that the present disclosure may be applied to various other scenarios.

### [First Embodiment]

In this embodiment, the mapping is inverse tone mapping using independent spatial image portions. The inverse tone mapping usually extends the luminance range. So, this embodiment maps luminance component of the input image through inverse tone mapping.

Typically, the inverse tone mapping is to convert original LDR content to target HDR format, so as to ensure legacy content to be displayed on the new emerging HDR screens. For example, an input image may be presumed to be an 8-bit encoded LDR image that is to be extended to match a 12-bit encoded HDR format. Of course, the present disclosure is not limited thereto.

In this embodiment, step S130 may be implemented by using one or more predefined LUTs, which specify correspondences between image components of the input image and those of the output image.

The predefined LUTs may be obtained as follows. To be specific, a large dataset is established from natural LDR images including nature, urban, sport, people, indoor, outdoor, sunshine, night scenes to handle most of realistic situations. Patterns are extracted from such a dataset. The patterns may be subparts of original pictures, such as blocks of size from NXM pixels till full version of the original pictures. Then, several iTM (inverse tone mapping) operators *o* (see Francesco Banterle, Patrick Ledda, Kurt Debattista, and Alan Chalmers. 2006. Inverse tone mapping. In Proceedings of the 4th international conference on Computer graphics and interactive techniques in Australasia and Southeast Asia (GRAPHITE '06). ACM, New York, NY, USA, 349-356) are applied to convert from LDR to HDR format. Every pattern *p* is marked with the iTMO providing the best visual quality, such as *pₒ.* The Visible Differences Predictor (VDP) metric, which is proposed in Scott Daly. 1993. The visible differences predictor: an algorithm for the assessment of image fidelity. In Digital images and human vision, Andrew B. Watson (Ed.). MIT Press, Cambridge, MA, USA 179-206, is used to assess the performances of different iTMOs. For each *pₒ,* a LUT is extrapolated between the LDR and the resulting HDR luminance mapping. In addition to the successful iTM Operator, other metadata *mt* or statistics are computed and associated to each LUT for describing the use case. These metadata are for example the mea µ and the standard deviation σ of the pattern, such as LUTₙ where n = {o, µ, σ}.

According to this embodiment, the computation capability determined at step S110 may be indicated by a CPU budget, CPUₘₐₓ. CPUₘₐₓ may be used to compute the number of regions where different processings can be applied. Then, depending on the number and the resolution of the input image, N×M, the regions Rᵢ with i = {1..M} may be extrapolated.

Knowing the CPU budget CPU_{LUT} of a LUT mapping on resolution (U × V) with U<<N and V<<M, we can find the maximum number of LUTs that can be used and maximum number of regions: m = CPUₘₐₓ/ CPU_{LUT}. The budget CPU_{LUT} will depend on the number of LUT entries and their bit-depth. Therefore, if m is not sufficient to obtain the wanted spatial granularity of regions, the number of LUT entries or their bit-depth could be reduced in order to increase m.

One way to define spatially the regions is to use both a color segmentation algorithm (see J. van de Weijer et al "Learning Color Names for Real-World Applications" published in IEEE Transactions in Image Processing 2009) and a visual attention model. These two algorithms being combined may provide hierarchically the regions where the mapping is the most critical.

A visual attention model as disclosed in EP1695288A1 may be used. This model creates saliency map (SM) where the most visually attractive pixels are depicted with values from 0 to 255. It is based on a biological modeling of visual system.

Thus, for all decomposed regions Rₛ, the attractiveness is computed by averaging the saliency of each pixel of the considered region from the saliency map. Then, the regions are classified from the most important mean of saliency to the lowest. The first m-1 regions are selected to be mapped in a later step. It should be noted that a first mapping is applied on the complete resolution and refined by regions.

For each region Rₛ, features are computed to be compared to the metadata associated to each LUTₙ. For example, the mean and standard deviation of each region is computed and the LUTₙ providing the smallest distance such as mini √[(µᵢ-µₛ)²+ (σᵢ- σₛ)²] may be selected.

Once the number of LUTs, the regions and the most relevant LUT for each region have been determined, the LUT may be applied using known interpolation techniques, for example bilinear interpolation.

### [Second Embodiment]

In this embodiment, the mapping is color gamut expansion using dependent, overlapping, spatial image portions. In other words, the second embodiment maps color components of the input image through color gamut expansion.

This embodiment applies the method 100 in color gamut expansion. Today's video content is usually encoded in 8 bit RGB code values, for red, green, and blue, according to the BT.709 standard of the ITU-R. When this content is shown on display device having a gamut larger than BT.709, the color gamut of the content has to be expanded. An issue of this expansion is the fidelity of colors after expansion. For example, when skin colors in human faces get too saturated by CGE, the result might not be acceptable.

According to this embodiment, two predefined LUTs may be prepared. LUTa is prepared to expand the color gamut of images that do not contain human faces, and LUTb is prepared for images that contain human faces.

In the present disclosure, the principal of gamut mapping such as explained in the article of Stauder et al. entitled "Motion Picture Versioning by Gamut Mapping" published in the proceedings of the 18th Color Imaging Conference in 2010 may be employed. Gamut mapping is controlled by the source gamut boundary of the content (defined by the BT.709 standard) and the target gamut boundary of the display. In order to expand the color gamut, CGE maps source color to target colors using gamut mapping. Colors are mapped along trajectories starting from a single anchor point on the lightness axis of CIELAB space, such as defined by the well-known method of node clipping. A source color C lying on a trajectory and having a distance d from the anchor point is mapped along the trajectory to a target color C' having a distance d' from the anchor point. Source and target colors C and C' are entirely defined by the distances d and d', respectively. The calculation of d' given is influenced by two parameters. First, the distance ds of the intersection between the trajectory and the source gamut boundary, and second, the distance dt of the intersection between the trajectory and the target gamut boundary.

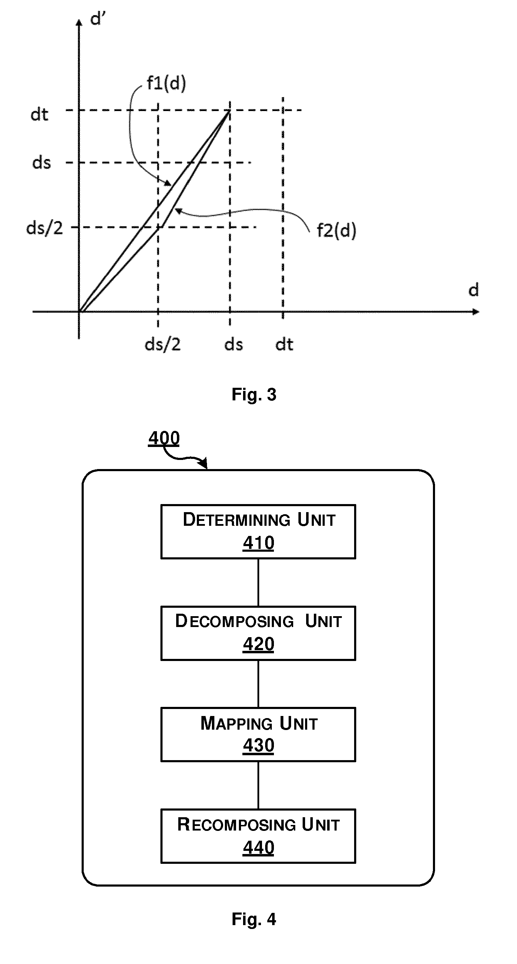

Fig.3 shows how LUTa and LUTb are calculated. LUTa is based on linear gamut expansion using f1 (d), while LUTb uses f2(d) that preserves colors for d<ds/2 and expands colors for d>ds/2. Finally, LUT1 and LUT2 are calculated from LUTa and LUTb. LUT1 is set to LUTb and LUT2 is set to LUTa - LUTb.

The advantage is that LUT1 and LUT2 are less complex than LUTa and LUTb. LUT application should be recursive. For certain image regions, LUT1 is firstly applied, and then LUT2 is applied, so as to get the effect of a linear expansion.

Like the first embodiment, this embodiment also uses CPU budget CPUₘₐₓ as the computation capability. If CPUₘₐₓ is smaller than a predefined threshold CPU₀, images are expanded using LUT1. If CPUₘₐₓ exceeds CPU₀, LUT1 or LUT2 may be used as described as follows. The threshold CPU₀ indicates the complexity of face detection and local LUT application.

When the CPU budget allows, each image may be decomposed into two overlapping portions. The first portion consists of all regions *not* showing a human face. The second portion is the whole image. The first portion entirely overlaps with the second portion. For face detection, a learning based method such as described by Li and Jain in their book entitled "Face detection handbook" published by Springer in 2011 may be used. For example, a learning database of 1000 facial images may be used to learn a face detector based on image features. The detector is then used to extract the first portion of an input image.

When selecting LUT, LUT1 is firstly applied to the whole image, i.e., portion two. LUT1 represents a CGE that preserves non-saturated colors such as skin tones. Then, LUT2 is applied to portion one, i.e. all image regions not containing faces. In these regions, expansion can be stronger.

Once the number of LUT, the regions and the most relevant LUT for each regions have been determined, the LUT are applied using known interpolation techniques, for example bilinear interpolation.

According to the foregoing embodiments, the present disclosure have advantages as follows:
- For end-user application, such as porting on chip, STB, the present disclosure may be of high-interest, especially when computation capability such as computation complexity is an issue and when different other processings may compete with a color component mapping.
- Since each mapping operator is applied only to a portion of the input image, corresponding mapping operators can be simpler than those applied to the whole image.
- Since the overall color mapping is applied portion by portion, the available complexity can be easily matched.

Fig. 4 is a schematic block diagram of an apparatus 400 for mapping an input image according to the present disclosure.

The apparatus 400 is implemented to perform the method 100. The apparatus 400 may be implemented in a display such as a Liquid Crystal Display (LCD) or Light Emitting Diode (LED) display, a set-top box, or any other appropriate video decoder, or post-processing devices.

Referring to Fig. 4, the arrangement 400 may include a determining unit 410, a decomposing unit 420, a mapping unit 430, and a recomposing unit 440.

The determining unit 410 is configured to determine a computation capability available for the mapping. For example, the computation complexity comprises any of computation power, computation time or computation complexity available for the mapping.

The decomposing unit 420 is configured to decompose the input image into a number M of image portions based on the determined computation capability, M being a positive integer larger than 1. For example, the number M of image portions are one of: independent and non-overlapping spatial image portions; dependent and overlapping spatial image portions; or dependent and multi-resolution levels of the input image.

The mapping unit 430 is configured to perform mappings on each of the number M of image portions, and the mappings are different for at least two of the number M of image portions.

For example, the mapping unit 430 may be configured to perform the mapping on image components of the input image. In this case, the image components may include R, G and B code values of the input image, or intensity, hue and saturation components of the input image.

The recomposing unit 440 is configured to recompose an output image from the mapped image portions.

In an implementation, the mapping unit 430 is configured to calculate a set of mapping operators adapted to image the number M of image portions of the input image; select at least two of the calculated mapping operators for each of the number M of image portions; and map each of the number M of image portions by sequentially applying the selected mapping operators. For example, the mapping operators are inverse Tone Mapping Operators (iTMOs) or gamut mapping operators.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

## Claims

1. A method for mapping an input image, the method comprising:
determining (S110) a computation capability available for the mapping;
decomposing (S120) the input image into a number M of image portions based on the determined computation capability, M being a positive integer larger than 1;
performing (S130) mappings on each of the number M of image portions, wherein the mappings are different for at least two of the number M of image portions; and
recomposing (S140) an output image from the mapped image portions.

2. The method according to claim 1, wherein, performing (130) mappings on each of the number M of image portions comprises:
calculating (S131) a set of mapping operators adapted to image the number M of image portions of the input image;
selecting (S132) at least two of the calculated mapping operators for each of the number M of image portions; and
mapping (S133) each of the number M of image portions by sequentially applying the selected mapping operators.

3. The method according to claim 1 or 2, wherein the mapping operators are inverse Tone Mapping Operators (iTMOs) or gamut mapping operators.

4. The method according to any of claims 1 to 3, wherein, the computation capability comprises any of computation power, computation time or computation complexity available for the mapping.

5. The method according to any of claims 1 to 4, wherein, the mapping is performed on image components of the input image, and the image components include R, G and B code values of the input image, or intensity, hue and saturation components of the input image.

6. The method according to any of claims 1 to 5, wherein the number M of image portions are one of:
independent and non-overlapping spatial image portions;
dependent and overlapping spatial image portions; or
dependent and multi-resolution levels of the input image.

7. An apparatus for mapping an input image, the apparatus comprising:
a determining unit (410) configured to determine a computation capability available for the mapping;
a decomposing unit (420) configured to decompose the input image into a number M of image portions based on the determined computation capability, M being a positive integer larger than 1;
a mapping unit (430) configured to perform mappings on each of the number M of image portions, wherein the mappings are different for at least two of the number M of image portions; and
a recomposing unit (440) configured to recompose an output image from the mapped image portions.

8. The apparatus according to claim 7, wherein, the mapping unit is configured to:
calculate a set of mapping operators adapted to image the number M of image portions of the input image;
select at least two of the calculated mapping operators for each of the number M of image portions; and
map each of the number M of image portions by sequentially applying the selected mapping operators.

9. The apparatus according to claim 7 or 8, wherein the mapping operators are inverse Tone Mapping Operators (iTMOs) or gamut mapping operators.

10. The apparatus according to any of claims 7 to 9, wherein, the computation capability comprises any of computation power, computation time or computation complexity available for the mapping.

11. The apparatus according to any of claims 7 to 10, wherein, the mapping unit is configured to perform the mapping on image components of the input image, and the image components include R, G and B code values of the input image, or intensity, hue and saturation components of the input image.

12. The apparatus according to any of claims 7 to 11, wherein the number M of image portions are one of:
independent and non-overlapping spatial image portions;
dependent and overlapping spatial image portions; or
dependent and multi-resolution levels of the input image.

13. Computer program product downloadable from a communication network and/or recorded on a medium readable by computer and/or executable by a processor, comprising program code instructions for implementing the steps of a method according to at least one of claims 1 to 6.

14. Non-transitory computer-readable medium comprising a computer program product recorded thereon and capable of being run by a processor, including program code instructions for implementing the steps of a method according to at least one of claims 1 to 6.
